# EUROPÄISCHE PATENTSCHRIFT

(11) **EP 3 318 353 B1**
(45) Veröffentlichungstag und Bekanntmachung des Hinweises auf die Patenterteilung: **12.08.2020**
(21) Anmeldenummer: 17020467.1
(22) Anmeldetag: 12.10.2017
(51) Int. Cl.: B22F 3/105, G01N 27/407, G01N 30/88

(54) **VERFAHREN ZUR GENERATIVEN FERTIGUNG EINES 3-DIMENSIONALEN BAUTEILS**
METHOD FOR THE GENERATIVE PRODUCTION OF A THREE-DIMENSIONAL COMPONENT
PROCÉDÉ DE FABRICATION ADDITIVE D'UN COMPOSANT TRIDIMENSIONNEL

(30) Priorität: 02.11.2016 EP 16020428
(43) Veröffentlichungstag der Anmeldung: 09.05.2018
(73) Patentinhaber: Linde GmbH, 82049 Pullach (DE); Airbus Defence and Space GmbH, 82024 Taufkirchen (DE)
(72) Erfinder: Scholz, Jürgen, 81379 München (DE); Wiberg, Sören, 17835 Ekerö (SE); Foret, Pierre, 80796 München (DE); Hultstein, Eric, 81927 München (SE); Bauer, Dominik, 82110 Germering (DE)
(74) Vertreter: Gellner, Bernd

(56) Entgegenhaltungen:
- EP-A1- 3 075 470
- WO-A1-2016/062714
- JP-A- S60 157 085
- US-A1- 2016 045 981
- US-A1- 2016 067 779

## Beschreibung

Die vorliegende Erfindung betrifft ein Verfahren zum generativen Fertigen eines dreidimensionalen Bauteils in einer Prozesskammer, wobei die Schritte "Bereitstellen eines metallischen Ausgangsmaterials in der Prozesskammer" und "Aufschmelzen des Ausgangsmaterials durch Energiezufuhr" mehrfach wiederholt werden, und wobei in der Prozesskammer ein Prozessgas bereit gestellt wird, wobei der Sauerstoffgehalt des Prozessgases bestimmt wird. Ferner bezieht sich die Erfindung auf eine Vorrichtung zum generativen Fertigen eines dreidimensionalen Bauteils, umfassend eine Prozesskammer mit einer Bauplattform und einer Auftragsvorrichtung zum Aufbringen des Ausgangsmaterials auf die Bauplattform, einen Laser zum Aufschmelzen des Ausgangsmaterials und eine Prozessgaszuführeinrichtung zum Zuführen von Prozessgas in die Prozesskammer.

Mittels generativer Fertigungsverfahren ist es möglich, verschiedenste dreidimensionale Bauteile mit komplexer Geometrie herzustellen.

Beim 3D-Drucken werden beispielsweise dreidimensionale Werkstücke schichtweise aufgebaut. Der Aufbau erfolgt computergesteuert aus einem oder mehreren flüssigen oder festen Werkstoffen nach vorgegebenen Maßen und Formen (CAD). Beim Aufbau finden physikalische oder chemische Härtungs- oder Schmelzprozesse statt. Typische Werkstoffe für das 3D-Drucken sind Kunststoffe, Kunstharze, Keramiken und Metalle. 3D-Drucker werden in der Industrie und der Forschung eingesetzt. Daneben gibt es auch Anwendungen im Heim- und Unterhaltungsbereich sowie in der Kunst.

Der 3D-Druck ist ein generatives beziehungsweise additives Fertigungsverfahren. Die wichtigsten Techniken des 3D-Druckens sind das selektive Laserschmelzen und das Elektronenstrahlschmelzen für Metalle und das selektive Lasersintern für Polymere, Keramik und Metalle, die Stereolithografie und das Digital Light Processing für flüssige Kunstharze und das Polyjet-Modeling sowie das Fused Deposition Modeling für Kunststoffe und teilweise Kunstharze.

Ein weiteres generatives Verfahren ist das punktuelle Aufschmelzen und Erstarren. Bei dieser Art von Verfahren wird Metallpulver oder Metalldraht schichtweise aufgeschmolzen und erstarrt, sodass ein dreidimensionales Bauteil generiert werden kann. Durch die lokal begrenzte Energieeinbringung mittels Laserstrahl ist die Größe des ausgebildeten Schmelzbades gering. Somit besteht die Möglichkeit, filigrane Strukturen zu erzeugen. Entsprechende Verfahren werden als Laser Engineered Net Shaping (LENS), als Direct Metal Deposition (DMD), als Laser Additive Manufacturing (LAM), als Selective Laser Melting (SLM), als Laser Metal Fusion (LFM) oder als Laser Metal Deposition (LMD) kommerziell vertrieben.

Beim lokalen Laser-Sintern oder Schmelzen wird zwischen indirekten und direkten Verfahren unterschieden.

Selektives Laser-Sintern (SLS) ist ein Verfahren, um räumliche Strukturen durch Sintern aus einem pulverförmigen Ausgangsstoff herzustellen. Lasersintern ist ein generatives Schichtbauverfahren: das Werkstück wird Schicht für Schicht aufgebaut. Durch die Wirkung der Laserstrahlen können so beliebige dreidimensionale Geometrien auch mit Hinterschneidungen erzeugt werden, z.B. Werkstücke, die sich in konventioneller mechanischer oder gießtechnischer Fertigung nicht herstellen lassen.

Beim selektiven Laser-Sintern (SLS/LMF) wird auf einer Arbeitsfläche (Bauplattform) eine Schicht Pulverwerkstoff aufgetragen. Das lose Pulver wird durch einen Laserstrahl punktuell aufgeschmolzen. Dabei werden die Pulverpartikel je nach verwendetem Werkstoff in der Schicht und mit der darunter liegenden Schicht verbunden. Für die Herstellung metallischer Bauteile können zwei grundsätzliche Entwicklungsrichtungen differenziert werden. Neben der direkten Verfestigung metallischer Pulverwerkstoffe durch Laserstrahlung (direktes Metall-Laser-Sintern) hat sich bereits frühzeitig die Herstellung metallischer Bauteile über eine Kombination aus SLS von Kunstsoff ummanteltem Metallpulver mit nachträglicher thermischer Behandlung (IMLS) etabliert.

Beim direkten Metall-Laser-Sintern (DMLS) werden entweder ein- oder mehrkomponentige Metallwerkstoffe verwendet. Insbesondere werden dabei DMLS-Mehrkomponentenpulver verwendet, die aus verschiedenen Legierungselementen bestehen. Die im Pulver enthaltene niedrig schmelzende Komponente wird durch einen Laserstrahl aufgeschmolzen und umfließt die hochschmelzende Komponente, die als Strukturgeber dient.

Beim Electron Beam Melting (EBM) entspricht der Prozessablauf im Wesentlichen dem der Laser-basierten Verfahren. Loses Metallpulver, im Pulverbett oder über eine Düse, oder Draht wird dabei punktuell aufgeschmolzen und erstarrt anschließend in der gewünschten Kontur. Die dafür erforderliche Energie wird durch einen Elektronenstrahl eingebracht. Das Verfahren erfolgt meistens in einer Inertgas-gefluteten UnterdruccKammer.

Demgemäß werden bei generativen Fertigungsverfahren ein Pulverbett, eine Pulverzuführung oder eine Drahtzuführung verwendet, wobei diese Ausgangsmaterialien dann mittels Energiezufuhr, beispielsweise mittels Laserstrahl, Elektronenstrahl oder Plasma-/Lichtbogen, aufgeschmolzen und anschließend verfestigt werden. Weiterhin werden bei den generativen Fertigungsverfahren Inert-oder Aktivgase als Prozessgase verwendet.

Generative Fertigungsververfahren finden häufig in einer Prozesskammer statt, die mit einem Prozessgas gefüllt ist. Üblicherweise wird dabei ein Inertgas verwendet, bei dem die Verunreinigungen strikt kontrolliert werden müssen. Beispielsweise darf der Sauerstoffgehalt einen bestimmten Schwellenwert nicht übersteigen. Ein weiteres Beispiel für Verunreinigungen ist die im Prozessraum vorliegende Feuchtigkeit, die ebenfalls streng kontrolliert werden muss.

Das Prozessgas wird beispielsweise beim Öffnen der Prozesskammer verunreinigt. Beim Entnehmen eines hergestellten Bauteils und der anschließenden Herstellung eines neuen Bauteils, tritt Umgebungsluft in die Prozesskammer ein. Eine andere Quelle für Verunreinigungen ist das Pulver selbst, das Verunreinigungen an der Oberfläche der Partikel absorbiert haben kann, die dann während des Schmelzprozesses frei gesetzt werden und dadurch die Prozessgasatmosphäre kontaminieren.

Aus der WO 2016/062714 A1 ist eine Vorrichtung zum additiven Fertigen bekannt, wobei in der Prozesskammer ein Getter zum Absorbieren von Sauerstoff, Stickstoff und/oder Wasserstoff vorgesehen ist.

Aus der US 2016/0045981 A1 ist ein Verfahren zur Regelung der Gasatmosphäre beim 3-dimensionalen Laserdrucken bekannt.

Die US 2016/0067779 A1 beschreibt ein System zum additiven Fertigen mit einem System zur Detektion von Pulververunreinigungen.

Die JPS60157085 A beschreibt ein Verfahren zur Bestimmung des Sauerstoffgehalts und des Wasserstoffgehalts in einem Behälter eines Kernreaktors.

Aufgabe der vorliegenden Erfindung ist es daher ein generatives Fertigungsverfahren bereitzustellen, welches eine bessere Kontrolle der Prozessgasatmosphäre in der Prozesskammer erlaubt.

Insbesondere soll die Erfindung eine bessere Kontrolle des Sauerstoffgehalts und/oder des Taupunkts des Prozessgases ermöglichen.

Alle oder ein Teil dieser Aufgaben werden durch die unabhängigen Ansprüche gelöst. Vorteilhafte Ausgestaltungen sind in den Unteransprüchen angegeben.

Erfindungsgemäß ist ein Verfahren zum generativen Fertigen eines dreidimensionalen Bauteils in einer Prozesskammer vorgesehen, wobei die Schritte
- Bereitstellen eines metallischen Ausgangsmaterials in der Prozesskammer
- Aufschmelzen des Ausgangsmaterials durch Energiezufuhr, mehrfach wiederholt werden.
Dabei wird in der Prozesskammer ein Prozessgas bereitgestellt. Der Sauerstoffgehalt des Prozessgases wird bestimmt.

Das erfindungsgemäße Verfahren zeichnet sich dadurch aus, dass die folgenden Schritte durchgeführt werden:
1. Der Wasserstoffgehalt des Prozessgases wird bestimmt.
2. Der Sauerstoffgehalt des Prozessgases wird mittels eines Sauerstoffsensors bestimmt
   und/oder
   der Taupunkt des Prozessgases wird bestimmt.
3. Die in Schritt 2 bestimmten Werte für den Sauerstoffgehalt und/oder den Taupunkt werden mittels des in Schritt 1 bestimmten Werts für den Wasserstoffgehalt korrigiert.

Die Schritte 1 bis 3 können gleichzeitig mit den Schritten "Bereitstellen eines metallischen Ausgangsmaterials in der Prozesskammer" und "Aufschmelzen des Ausgangsmaterials durch Energiezufuhr", zwischen diesen beiden Schritten oder nach einem oder mehreren dieser Schritte durchgeführt werden.

Unter einem generativen Fertigen wird im Rahmen der vorliegenden Erfindung das lagenweise bzw. schichtweise Aufbauen eines dreidimensionalen Bauteils unter Verwendung eines Pulverbettes, einer Pulverzuführung oder einer Drahtzuführung, welche als Ausgangsmaterial dienen, und durch Energiezufuhr, beispielsweise mittels Laserstrahl, Elektronenstrahl oder Plasma bzw. Lichtbogen, aufgeschmolzen werden, verstanden. Diesbezüglich wird auf die in der Beschreibungseinleitung genannten generativen Fertigungsverfahren (3D-Drucken bzw. bei der Verfestigung durch chemische Aktivatoren, Aufschmelzen und Erstarren (Laser Engineered Net Shaping (LENS), als Direct Metal Deposition (DMD) oder als Laser Additive Manufacturing (LAM)), lokalen Sintern oder Schmelzen, (Laser-Sintern (SLS)) Metall-Laser-Sintern (DMLS), Metall-Laser-Sintern (IMLS), Electron Beam Melting (EBM)) Bezug genommen.

Im Rahmen von der Erfindung vorausgegangenen Versuchen wurde festgestellt, dass während der Energiezufuhr das Prozessgas an der Bearbeitungsstelle, das heißt an der Stelle, an der das Ausgangsmaterial der Energiezufuhr ausgesetzt wird, lokal so stark erwärmt werden kann, dass in dem Prozessgas befindlicher Wasserdampf in Wasserstoff und Sauerstoff aufgespalten wird. Während des Aufschmelzens des Ausgangsmaterials kann daher an der Bearbeitungsstelle eine erhöhte Sauerstoffkonzentration vorliegen.

Der Sauerstoffgehalt des Prozessgases kann mittels eines Sauerstoffsensors bestimmt werden. Hierzu wird beispielsweise eine sogenannte Lambdasonde eingesetzt. Eine Lambdasonde vergleicht den Sauerstoffgehalt im Prozessgas mit dem bekannten Sauerstoffgehalt eines Referenzgases, in der Regel mit dem Sauerstoffgehalt von Luft. Dabei nutzt man die Eigenschaft von bestimmten Keramiken aus, Sauerstoffionen elektrolytisch transportieren zu können. Wird eine Seite der Keramik einem Referenzgas und die andere Seite der Keramik einem Prozessgas ausgesetzt, so entsteht eine Spannung, welche ein Maß für den unterschiedlichen Sauerstoffpartialdruck der beiden Gase ist. Bei bekanntem Referenzgas lässt sich daraus der Sauerstoffgehalt des Prozessgases ermitteln.

Die elektrolytische Leitfähigkeit vieler Keramiken tritt jedoch nur bei erhöhten Temperaturen von beispielsweise 700 °C auf. Die Lambdasonde und das Prozessgas werden daher für die Messung des Sauerstoffgehalts entsprechend aufgeheizt. Bei 700°C reagiert der Sauerstoff des Prozessgases mit etwaigem in dem Prozessgas befindlichen Wasserstoff zu Wasser. Das heißt, der Sauerstoffgehalt des Prozessgases wird durch dessen Messung gesenkt. Der von der Lambdasonde bestimmte Wert für den Sauerstoffgehalt ist daher niedriger als der tatsächliche Sauerstoffgehalt des Prozessgases bei Raumtemperatur.

Zur genaueren Bestimmung des Sauerstoffgehalts des Prozessgases wird daher erfindungsgemäß zunächst der Wasserstoffgehalt des Prozessgases bestimmt. Der Wasserstoffgehalt ist ein Maß für die Dissoziation von Wasser durch die Energiezufuhr beim Aufschmelzen des Ausgangsmaterials und damit ein Maß für den durch die Dissoziation des Wassers erzeugten Sauerstoff. Hierzu wird der Wasserstoffgehalt des Prozessgases direkt in der Prozesskammer bestimmt oder es wird eine Probe des Prozessgases genommen und deren Wasserstoffgehalt ermittelt.

Anschließend wird der Sauerstoffgehalt des Prozessgases bestimmt. Hierzu kann der dafür eingesetzte Sauerstoffsensor direkt in der Prozesskammer oder außerhalb der Prozesskammer vorgesehen sein. Entsprechend kann das Prozessgas, dessen Sauerstoffgehalt bestimmt wird, entweder in der Prozesskammer verbleiben oder ein Teil des Prozessgases wird aus der Prozesskammer abgezogen und dem Sauerstoffsensor zugeführt, um dessen Sauerstoffgehalt zu ermitteln. Der Teil des Prozessgases kann hierbei dieselbe Probe sein, deren Wasserstoffgehalt zuvor untersucht wurde. Es ist aber ebenso möglich, für die Bestimmung des Wasserstoffgehalts und die Bestimmung des Sauerstoffgehalts unterschiedliche Teile oder Proben des Prozessgases zu verwenden. So kann beispielsweise eine der beiden Messungen, das heißt Messung des Wasserstoffgehalts oder Messung des Sauerstoffgehalts, in der Prozesskammer stattfinden, während die andere Messung an einer Probe des Prozessgases durchgeführt wird, welche zuvor der Prozesskammer entnommen wurde.

Der ermittelte Wert für den Sauerstoffgehalt des Prozessgases wird aufgrund der bei der Sauerstoffmessung auftretenden Rekombination von Wasserstoff und Sauerstoff zu Wasser niedriger ausfallen als der tatsächliche Sauerstoffgehalt des Prozessgases vor der Messung.

Erfindungsgemäß wird daher der ermittelte Wasserstoffgehalt des Prozessgases oder der Probe genutzt, um den ermittelten Sauerstoffgehalt zu korrigieren.

Als Sauerstoffsensor wird vorzugsweise eine Lambdasonde verwendet. Eine Lambdasonde ist preisgünstig und hat den Vorteil sehr kurzer Reaktionszeiten. Der Nachteil einer Lambdasonde, nämlich die Verfälschung des Messergebnisses durch anwesenden Wasserstoff, wird durch die vorliegende Erfindung aufgehoben.

Der Wasserstoffgehalt des Prozessgases wird von Vorteil mit Gaschromatographie oder Wärmeleitfähigkeitdetektor bestimmt.

In einer bevorzugten Ausführung der Erfindung wird ein Teil des Prozessgases aus der Prozesskammer abgezogen und wieder in die Prozesskammer zurückgeführt. Ein Teil des Prozessgases wird also im Kreislauf geführt. Von Vorteil erfolgt die Bestimmung des Wasserstoffgehalts oder des Sauerstoffgehalts an dem der Prozesskammer entnommenen Teil des Prozessgases. Mit besonderem Vorteil werden Wasserstoffgehalt und Sauerstoffgehalt an dem der Prozesskammer entnommenen Teil des Prozessgases bestimmt. Je nach Ergebnis der Untersuchung von Wasserstoff- und Sauerstoffgehalt wird der aus der Prozesskammer abgezogene Teil des Prozessgases wieder komplett oder teilweise in die Prozesskammer zurückgeführt oder anderweitig ausgeleitet.

Alternativ oder ergänzend zu der beschriebenen Korrektur der Sauerstoffmessung kann die Erfindung auch zur Korrektur des Taupunkts verwendet werden. Wie oben erläutert, wird beim Einsatz einer Lambdasonde das Prozessgas erwärmt, so dass Wasserstoff und Sauerstoff zu Wasser reagieren. Eine Messung des Taupunkts bzw. des Wassergehalts des Prozessgases wird daher durch die Lambdasonde ebenfalls verfälscht. Erfindungsgemäß wird deshalb ergänzend oder alternativ zur Korrektur des Sauerstoffgehalts auch der gemessene Wert für den Taupunkt in der oben im Zusammenhang mit der Sauerstoffkorrektur beschriebenen Weise korrigiert.

Analog zu dem oben beschriebenen Verfahren der Bestimmung des Sauerstoffgehalts des Prozessgases kann auch der für die Messung des Taupunkts eingesetzte Sensor direkt in der Prozesskammer oder außerhalb der Prozesskammer vorgesehen sein. Entsprechend kann das Prozessgas, dessen Taupunkt bestimmt wird, entweder in der Prozesskammer verbleiben oder ein Teil des Prozessgases wird aus der Prozesskammer abgezogen und dem Sensor zur Taupunktbestimmung zugeführt. Ein oder mehrere der Messungen des Wasserstoffgehalts, des Sauerstoffgehalts und des Taupunkts können in der Prozesskammer oder auch außerhalb der Prozesskammer stattfinden.

Zusätzlich können auch noch weitere Parameter des in der Prozesskammer befindlichen Prozessgases oder des aus der Prozesskammer abgezogenen Stroms an Prozessgas bestimmt und gegebenenfalls mit einem Sollwert verglichen werden. Zum Beispiel kann der Wasserdampfgehalt des aus der Prozesskammer abgezogenen Prozessgases oder der Wasserdampfgehalt der Gasatmosphäre in der Prozesskammer ermittelt werden und mit einem vorgegebenen Sollwert verglichen werden. In Abhängigkeit von dem Ergebnis des Vergleichs des ermittelten Wertes mit dem Sollwert wird der Gasstrom entweder vollständig, teilweise oder überhaupt nicht in die Prozesskammer zurückgeführt. Je nach Ergebnis kann auch ein Teil des abgezogenen Stroms verworfen durch Inertgas, welches in die Prozesskammer eingeleitet wird, ersetzt werden.

Vorzugsweise werden einer oder mehrere der folgenden Parameter des aus der Prozesskammer abgezogenen Gasstroms bestimmt: Wasserstoffgehalt, Sauerstoffgehalt, Wasserdampfgehalt, Taupunkt, Kohlenstoffgehalt oder Temperatur. Alternativ oder ergänzend werden einer oder mehrere der folgenden Parameter des in der Prozesskammer befindlichen Prozessgases bestimmt: Wasserstoffgehalt, Sauerstoffgehalt, Wasserdampfgehalt, Taupunkt, Kohlenstoffgehalt oder Temperatur.

Der bei einer Kreislaufführung zurückgeführte Gasstrom oder neu hinzugegebenes Inertgas werden der Prozesskammer über einen oder mehrere Einlässe zugeführt, wobei die Einlässe vorzugsweise in einem unteren Bereich der Prozesskammer angeordnet sind. Auf diese Weise bleiben die Prozessparameter stabil und es sind homogene metallurgische Effekte während der Herstellung erzielbar. Insbesondere kann vorgesehen sein, dass zumindest ein Teil des Prozessgases durch das Ausgangsmaterial, das als Pulverbett vorliegt, hindurch zugeführt wird. Durch die unmittelbare Nähe des Bereichs, in dem das Prozessgas in die Prozesskammer eintritt, zum Pulverbett und zur Bearbeitungsstelle wird eine konstante Atmosphäre beim generativen Fertigen des Bauteils an der obersten Schicht des Bauteils erzeugt.

Das erfindungsgemäße Verfahren kann vorzugsweise ein Laser-Schmelz-Verfahren betreffen. Das Ausgangsmaterial wird dann mittels eines Laserstrahls lokal aufgeschmolzen.

Als Prozessgas ist vorzugsweise ein Inertgas, das bei gleicher Temperatur eine höhere Dichte als Luft aufweist, wie z.B. Argon, vorgesehen. Das Inertgas kann vorzugsweise eine Temperatur aufweisen, die niedriger als die Temperatur der in der Prozesskammer zu Beginn vorliegenden Luft ist. In beiden Fällen sammelt sich das Prozessgas im unteren Bereich der Prozesskammer, in dem sich auch die Bearbeitungsstelle befindet. Das schwerere gasförmige Argon drückt beispielsweise die leichtere Luft in den oberen Bereich der Prozesskammer, in dem zum Beispiel ein Auslass zum Abführen der Luft vorgesehen ist.

Es ist auch möglich, dem Prozessgas reaktive Komponenten, insbesondere reaktive Gase wie zum Beispiel CO oder CO2, oder gut wärmeleitende Gase, wie zum Beispiel He, zuzugeben.

Das Prozessgas kann in der Prozesskammer mittels zumindest einer Ventilatoreinrichtung verwirbelt werden. Auf diese Weise wird eine homogene Gaszusammensetzung über das gesamte Volumen der Prozesskammer bereitgestellt. Die entnommene Probe stellt somit eine gute Repräsentation der Zusammensetzung des Prozessgases in der Prozesskammer dar.

Auf die erfindungsgemäße Weise wird der Sauerstoffgehalt des Prozessgases bzw. der Probe des Prozessgases bestimmt. In einer Ausführungsform der Erfindung wird dem Prozessgas und/oder der Prozesskammer ein sauerstofffreies Gas zugeführt, wenn der korrigierte Wert für den Sauerstoffgehalt größer als ein vorgegebener Vergleichswert ist. Auf diese Weise kann der Sauerstoffgehalt des Prozessgases in der Prozesskammer unterhalb eines vorgegebenen Maximalwertes gehalten werden.

In einer weiteren Ausführungsform der Erfindung wird den oben genannten Schritten 1 bis 3 vorausgehend der Sauerstoffgehalt eines Gases sowohl mittels des Sauerstoffsensors als auch mittels eines Sauerstoff-Analysators gemessen. Als Sauerstoff-Analysator wird eine Mess- oder Aufnahmeeinrichtung verwendet, die den Sauerstoffgehalt des Gases mittels eines Verfahrens bestimmt, bei dem der Wasserstoffgehalt des Gases keinen Einfluss auf den ermittelten Wert für den Sauerstoffgehalt hat. Im Gegensatz dazu ist beispielsweise bei Verwendung einer Lambdasonde als Sauerstoffsensor der ermittelte Wert für den Sauerstoffgehalt vom Wasserstoffgehalt des Gases abhängig, da aufgrund des Messprinzips des Sauerstoffsensors während der Messung Sauerstoff und Wasserstoff zu Wasser reagieren können.

Die Differenz zwischen dem mit dem Sauerstoffsensor gemessenen Wert, der möglicherweise aufgrund des Wasserstoffgehalts des Gases verfälscht ist, und dem mit dem Sauerstoff-Analysator gemessenen Wert, der vom Wasserstoffgehalt des Gases unabhängig ist, wird dann in Korrelation zu dem gemessenen Wasserstoffgehalt gesetzt und diese Korrelation in Schritt 3 zur Korrektur des Wertes für den Sauerstoffgehalt verwendet.

Der Sauerstoffsensor wird also mit Hilfe des Sauerstoff-Analysators kalibriert. Das heißt, zunächst wird mittels des Sauerstoff-Analysators der Zusammenhang zwischen Wasserstoffgehalt eines Gases und dem mit dem Sauerstoffsensor ermittelten Wert für den Sauerstoffgehalt bestimmt und dieser Zusammenhang dann bei der späteren eigentlichen Messung genutzt, um den Wert für den Sauerstoffgehalt zu korrigieren.

Diese Kalibrierung wird vorzugsweise mit dem Prozessgas durchgeführt. Es ist aber auch möglich, ein anderes Gas für die Kalibrierung zu verwenden.

Die Erfindung sowie weitere Einzelheiten der Erfindung werden im Folgenden anhand von in den Zeichnungen schematisch dargestellten Ausführungsbeispielen näher erläutert. Hierbei zeigen:
- Figur 1: eine erste erfindungsgemäße Vorrichtung zum generativen Fertigen eines 3-dimensionalen Bauteils und
- Figur 2: eine alternative Ausführungsform der Erfindung.

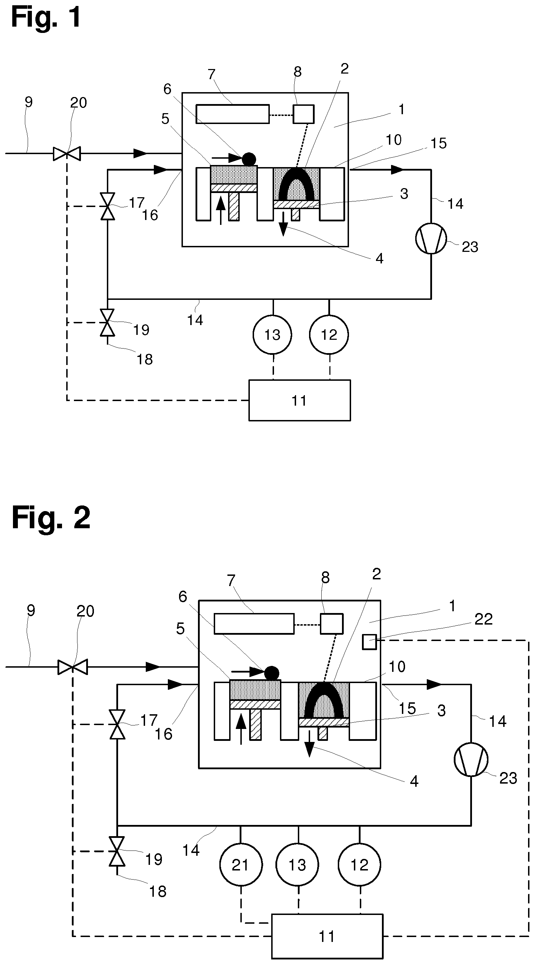

Figur 1 zeigt eine schematische Darstellung einer Vorrichtung zur Durchführung des erfindungsgemäßen Verfahrens.

Im Folgenden wird eine Vorrichtung zum generativen Fertigen eines dreidimensionalen Bauteils beschrieben. Wie bereits vorstehend erwähnt, ist das erfindungsgemäße Verfahren aber nicht auf die dargestellte Vorrichtung zum generativen Fertigen von dreidimensionalen Bauteilen beschränkt.

Die Vorrichtung ist eine Laser-Schmelz-Vorrichtung. Die Laser-Schmelz-Vorrichtung umfasst eine Prozesskammer 1, die als Bauraum für das dreidimensionale Bauteil 2 dient.

In der Prozesskammer 1 befindet sich eine Bauplattform 3 zur Aufnahme des zu fertigenden Bauteils 2 angeordnet. Die Bauplattform 3 weist eine Höhenverstelleinrichtung 4 auf, mittels der die Bauplattform 3 in vertikaler Richtung einstellbar ist.

Weiterhin umfasst die Vorrichtung 1 einen Vorratsbehälter 5. Der Vorratsbehälter 5 ist zur Aufnahme eines verfestigbaren pulverförmigen Ausgangsmaterials ausgebildet.

Weiterhin ist eine Auftrageinrichtung 6 zum Aufbringen des Ausgangsmaterials auf die Bauplattform 3 vorgesehen. Eine solche Auftrageinrichtung 6 ist in horizontaler Richtung parallel zur Arbeitsebene 10 beweglich.

Zudem ist ein Laser 7 zum Erzeugen eines Laserstrahls vorgesehen. Ein von dem Laser 7 erzeugter Laserstrahl wird über eine Umlenkeinrichtung 8 umgelenkt und durch eine Fokussiereinrichtung (nicht dargestellt) auf einen vorbestimmten Punkt unmittelbar unterhalb oder in der Arbeitsebene 10 fokussiert. Mittels der Umlenkeinrichtung 8 kann der Verlauf des Laserstrahls derart verändert werden, dass er die dem Querschnitt des herzustellenden Objekts 2 entsprechenden Stellen der aufgetragenen Schicht aufschmilzt.

Zudem ist eine Prozessgaszuführeinrichtung 9 vorgesehen, mittels der die Prozesskammer 1 mit einem Prozessgas beaufschlagbar ist.

Die Prozessgaszuführeinrichtung 9 weist einen oder mehrere Vorratsbehälter für das Prozessgas oder einzelne Bestandteile des Prozessgases auf, wobei der Prozessgasvorratsbehälter (nicht dargestellt) über einen bzw. mehrere Leitungsabschnitte mit in die Prozesskammer mündenden Einlässen (nicht dargestellt) verbunden ist. Die Einlässe, z.B. eine oder mehrere Düsen, zum Zuführen von Prozessgas sind in einem unteren Bereich der Prozesskammer 1 angeordnet. Die zugeführte Gasmenge kann mittels eines Regelventils 20 eingestellt werden. Vorzugsweise ist zumindest eine Düse der Prozessgaszuführeinrichtung im Bereich des Bodens der Prozesskammer 1 oder auf einem Fünftel, einem Viertel, der Hälfte, zwei Drittel oder drei Viertel der Höhe zwischen dem Boden der Prozesskammer 1 und der Arbeitsebene 10 oder in etwa auf Höhe der Arbeitsebene 10 angeordnet.

Als Prozessgas ist vorzugsweise ein Inertgas, wie z.B. Argon, vorgesehen, das bei gleicher Temperatur eine höhere Dichte als Luft aufweist.

Ebenfalls in einem unteren Bereich der Prozesskammer ist eine Ventilatoreinrichtung (nicht dargestellt) angeordnet. Es können auch mehrere Ventilatoreinrichtungen vorgesehen sein.

Weiter ist eine Kreislaufführung 14 eines Teils des Prozessgases vorgesehen. Ein Teil des Prozessgases kann über einen Auslass 15 aus der Prozesskammer 1 abgezogen, durch die Kreislaufleitung 14 geführt und über den Einlass 16 wieder in die Prozesskammer 1 zurückgeführt werden. Die Kreislaufführung des Prozessgases erfolgt beispielsweise mittels eines Gebläses oder eines Verdichters 23. In der Kreislaufleitung 14 ist ferner ein Regelventil 17 vorgesehen, mittels dessen die in die Prozesskammer 1 zurückgeführte Gasmenge geregelt werden kann. Außerdem ist eine Leitung 18 vorgesehen, welche von der Kreislaufleitung 14 abzweigt und es erlaubt, das durch die Kreislaufleitung 14 geführte Prozessgas abzuziehen. Die Leitung 18 ist ebenfalls mit einem Regelventil 19 versehen.

Weiterhin umfasst die Vorrichtung eine Steuereinrichtung 11 zum Steuern des Regelventils 20 der Prozessgaszuführeinrichtung 9 und der Regelventile 17 und 19. Die Steuereinrichtung 11 kann eine oder vorzugsweise zwei Regeleinrichtungen (nicht dargestellt) mit einem geschlossenen Regelkreis umfassen. Die Regeleinrichtungen können auch einen P-Regler, einen I-Regler, einen D-Regler und Kombinationen daraus, wie z.B. einen PID-Regler umfassen.

Außerdem sind ein Messsensor 12 zur Bestimmung des Wasserstoffgehalts des durch die Kreislaufleitung 14 geführten Prozessgases und eine Lambdasonde 13 zur Bestimmung des Sauerstoffgehalts des durch die Kreislaufleitung 14 geführten Prozessgases vorgesehen. Der Messsensor 12 und die Lambdasonde 13 sind an die Steuereinrichtung 11 angeschlossen.

Im Folgenden wird ein erfindungsgemäßes Verfahren anhand eines Ausführungsbeispiels beschrieben.

Argon wird als Prozessgas in einem unteren Bereich der Prozesskammer 1 zugeführt. Dadurch, dass die Prozessgaszuführeinrichtung 9 das Prozessgas auf Höhe der Arbeitsebene 10 oder darunter zugeführt wird, füllt sich die Prozesskammer 1 von unten nach oben mit dem Prozessgas.

Auf diese Weise drückt das schwerere gasförmige Argon die leichtere Luft in den oberen Bereich der Prozesskammer 1, in dem ein (nicht dargestellter) Auslass zum Abführen der Luft vorgesehen ist.

Das in der Prozesskammer 1 befindliche Prozessgas kann gegebenenfalls mittels einer Ventilatoreinrichtung in der Prozesskammer 1 verwirbelt werden. Durch die Verwirbelung werden Verunreinigungen aus den Toträumen der Prozesskammer entfernt. Zudem wird eine homogene Gaszusammensetzung über das gesamte Volumen der Prozesskammer bereitgestellt. Zusätzlich kann der Prozesskammer 1 sauberes Prozessgas über die Prozessgaszuführeinrichtung 9 zugeführt werden.

Ein metallisches Ausgangsmaterial wird auf der Bauplattform 3 in Form eines Pulverbetts mittels der Auftrageinrichtung 6 aufgebracht bzw. bereitgestellt. Alternativ kann das metallische Ausgangsmaterial auch mittels einer Pulverzuführung oder einer Drahtzuführung zugeführt werden.

Anschließend wird das Ausgangsmaterial mittels des Lasers 7 aufgeschmolzen. Die beiden Schritte "Bereitstellen von Ausgangsmaterial auf der Bauplattform 3" und "Aufschmelzen des Ausgangsmaterials" werden mehrfach wiederholt, wodurch das Bauteil schichtweise aufgebaut wird.

Es hat sich herausgestellt, dass durch die beim Aufschmelzen des Ausgangsmaterials mit dem Laser zugeführte Energie lokal in dem Prozessgas befindliches Wasser bzw. Wasserdampf in Wasserstoff und Sauerstoff zerlegt werden.

Der Sauerstoffgehalt des Prozessgases sollte aber während des Fertigungsprozesses unterhalb eines vorgegebenen Maximalwertes bleiben, um unerwünschten Oxidationen vorzubeugen. Erfindungsgemäß wird daher der Sauerstoffgehalt des Prozessgases überwacht. Hierzu wird eine Probe des durch die Kreislaufleitung 14 geführten Prozessgases der Lambdasonde 13 zugeführt und mittels der Lambdasonde 13 wird der Sauerstoffgehalt der Probe bestimmt. Der so ermittelte Wert für den Sauerstoffgehalt wird der Steuereinrichtung 11 übermittelt.

In der Lambdasonde 13 wird die Probe erwärmt, wobei Wasserstoff und Sauerstoff zu Wasser rekombinieren können. Der von der Lambdasonde 13 ermittelte Wert für den Sauerstoffgehalt der Probe hängt daher vom Wasserstoffgehalt der Probe ab. Je höher der Wasserstoffgehalt der Probe ist, einen desto geringeren Wert für den Sauerstoffgehalt wird die Lambdasonde 13 anzeigen, da entsprechend mehr Sauerstoff mit dem Wasserstoff zu Wasser reagiert.

Aus diesem Grund wird zusätzlich zu der Messung des Sauerstoffgehalts auch der Wasserstoffgehalt des Prozessgases bzw. des im Kreislauf geführten Prozessgases bestimmt. Hierzu wird dem Prozessgas eine zweite Probe entnommen und mittels eines Messsensors 12 wird deren Wasserstoffgehalt bestimmt.

Die zweite Probe kann stromaufwärts oder stromabwärts der Stelle entnommen werden, an der die Probe für die Bestimmung des Sauerstoffgehalts entnommen wird. Es ist auch möglich, dieselbe Probe für die Bestimmung des Sauerstoffgehalts und die Bestimmung des Wasserstoffgehalts heranzuziehen. In diesem Fall ist es günstig, zuerst den Wasserstoffgehalt zu bestimmen, da die Messung mittels der Lambdasonde 13 auch den Wasserstoffgehalt der Probe beeinflusst.

Der vom Messsensor 12 ermittelte Wert für den Wasserstoffgehalt wird ebenfalls der Steuereinrichtung 11 zugeführt. In der Steuereinrichtung 11 wird dann der ermittelte Wert für den Wasserstoffgehalt dazu verwendet, um den ermittelten Wert für den Sauerstoffgehalt zu korrigieren. In Abhängigkeit von dem korrigierten Wert für den Sauerstoffgehalt wird dann die Prozessgaszusammensetzung in der Prozesskammer 1 geregelt. Hierzu kann ein Teil der ursprünglichen Prozessgasatmosphäre über Leitung 18 abgeführt und / oder die Zusammensetzung und/oder Menge des über die Prozessgaszuführeinrichtung 9 zugeführten Prozessgases geändert werden.

In Figur 2 ist eine andere Ausführungsform der Erfindung dargestellt. Gleiche Bauteile sind in beiden Figuren mit denselben Bezugszeichen versehen.

Die Ausführung nach Figur 2 unterscheidet sich im Wesentlichen von der nach Figur 1 darin, dass ein zusätzlicher Sensor 21 zur Bestimmung des Wasserdampfgehalts oder des Taupunkts des im Kreislauf geführten Prozessgases vorgesehen ist. Der mit dem Sensor 21 bestimmte Wert für den Wasserdampfgehalt wird ebenfalls der Steuereinrichtung 11 zugeführt und in der Steuereinrichtung 11 gegebenenfalls mit Hilfe des ermittelten Wasserstoffgehalts korrigiert.

Weiterhin können alle oder einzelne der Parameter Sauerstoffgehalt, Wasserstoffgehalt, Wasserdampfgehalt und auch andere Parameter, wie zum Beispiel die Temperatur, Kohlenstoffgehalt, usw., auch direkt in der Prozesskammer 1 bestimmt werden. Dies ist in Figur 2 beispielhaft mit dem Sensor 22 verdeutlicht. Der oder die in der Prozesskammer 1 gemessenen Werte werden von Vorteil auch der Steuereinrichtung 11 zugeführt und zur Regelung der Zusammensetzung der Prozessgasatmosphäre genutzt.

### Bezuaszeichenliste:

- 1: Prozesskammer
- 2: Bauteil
- 3: Bauplattform
- 4: Höhenverstelleinrichtung
- 5: Vorratsbehälter
- 6: Auftrageinrichtung
- 7: Laser
- 8: Umlenkeinrichtung
- 9: Prozessgaszuführeinrichtung
- 10: Arbeitsebene
- 11: Steuereinrichtung
- 12: Messsensor
- 13: Lambdasonde
- 14: Kreislaufleitung
- 15: Auslass
- 16: Einlass
- 17: Regelventil
- 18: Leitung
- 19: Regelventil
- 20: Regelventil
- 21: Wasserdampfmessung
- 22: Sensor
- 23: Gebläse

## Patentansprüche

1. Verfahren zum generativen Fertigen eines dreidimensionalen Bauteils in einer Prozesskammer, wobei die Schritte
- Bereitstellen eines metallischen Ausgangsmaterials in der Prozesskammer
- Aufschmelzen des Ausgangsmaterials durch Energiezufuhr,
mehrfach wiederholt werden,
wobei in der Prozesskammer ein Prozessgas bereit gestellt wird, und wobei der Sauerstoffgehalt des Prozessgases bestimmt wird,
**dadurch gekennzeichnet,**
**dass** die folgenden Schritte durchgeführt werden:
1. der Wasserstoffgehalt des Prozessgases wird bestimmt,
2. der Sauerstoffgehalt des Prozessgases wird mittels eines Sauerstoffsensors bestimmt
und/oder
der Taupunkt des Prozessgases wird bestimmt,
3. der in Schritt 2 bestimmte Wert für den Sauerstoffgehalt und/oder den Taupunkt werden mittels des in Schritt 1 bestimmten Werts für den Wasserstoffgehalt korrigiert.

2. Verfahren nach Anspruch 1, **dadurch gekennzeichnet, dass** der Sauerstoffgehalt mittels einer Lambdasonde bestimmt wird.

3. Verfahren nach einem der vorhergehenden Ansprüche, **dadurch gekennzeichnet, dass** der Wasserstoffgehalt mittels Gaschromatographie oder Wärmeleitfähigkeitdetektor gemessen wird.

4. Verfahren nach einem der vorhergehenden Ansprüche, **dadurch gekennzeichnet, dass** ein Teil des Prozessgases aus der Prozesskammer abgezogen, im Kreislauf geführt und wieder in die Prozesskammer zurückgeführt wird, und dass der Sauerstoffgehalt und/oder der Wasserstoffgehalt des aus der Prozesskammer abgezogenen Teils des Prozessgases bestimmt werden.

5. Verfahren nach einem der vorhergehenden Ansprüche, **dadurch gekennzeichnet, dass** den Schritten 1 bis 3 vorausgehend der Wasserstoffgehalt eines Gases und der Sauerstoffgehalt des Gases sowohl mittels des Sauerstoffsensors als auch mittels eines Sauerstoff-Analysators gemessen werden, und die Differenz zwischen dem mit dem Sauerstoffsensor gemessenen Wert und dem mit dem Sauerstoff-Analysator gemessenen Wert in Korrelation zu dem gemessenen Wasserstoffgehalt gesetzt wird und diese Korrelation in Schritt 3 zur Korrektur des Wertes für den Sauerstoffgehalt verwendet wird.

6. Verfahren nach einem der vorhergehenden Ansprüche, **dadurch gekennzeichnet, dass** dem Prozessgas ein sauerstofffreies Gas zugeführt wird, wenn der korrigierte Wert für den Sauerstoffgehalt größer als ein vorgegebener Vergleichswert ist.

7. Verfahren nach einem der vorhergehenden Ansprüche, **dadurch gekennzeichnet, dass** die Energie zum Aufschmelzen des Ausgangsmaterials mit einem Laser zugeführt wird.

8. Verfahren nach einem der vorhergehenden Ansprüche, **dadurch gekennzeichnet, dass** als Prozessgas ein Inertgas, insbesondere Argon, vorgesehen ist.

9. Vorrichtung zur Ausführung eines Verfahrens nach einem der Ansprüche 1 bis 8, umfassend
- eine Prozesskammer mit einer Bauplattform und einer Auftragsvorrichtung zum Aufbringen des Ausgangsmaterials auf die Bauplattform,
- einen Laser zum Aufschmelzen des Ausgangsmaterials,
- eine Prozessgaszuführeinrichtung zum Zuführen von Prozessgas in die Prozesskammer,
**dadurch gekennzeichnet, dass**
ein Wasserstoffsensor zur Bestimmung des Wasserstoffgehalts des Prozessgases vorgesehen ist,
dass ein Sauerstoffsensor zur Bestimmung des Sauerstoffgehalts des Prozessgases oder ein Sensor zur Bestimmung des Taupunkts des Prozessgases vorgesehen sind,
dass der Wasserstoffsensor mit einer Steuereinrichtung verbunden ist und dass der Sauerstoffsensor oder der Sensor mit der Steuereinrichtung verbunden sind,
und dass die Steuereinrichtung mit der Prozessgaszuführeinrichtung in Wirkverbindung steht
wobei die Vorrichtung dazu konfiguriert ist, den bestimmten Wert für den Sauerstoffgehalt und/oder den Taupunkt mittels des bestimmten Werts für den Wasserstoffgehalt zu korrigieren.

## Claims

1. Method for the generative production of a three-dimensional component in a process chamber, wherein the steps of
- Providing a metallic starting material in the process chamber
- Melting the starting material by supplying energy,
are repeated several times,
wherein a process gas is provided in the process chamber and wherein the oxygen content of the process gas is determined,
**characterized in that**
the following steps are carried out:
1. The hydrogen content of the process gas is determined,
2. The oxygen content of the process gas is determined by means of an oxygen sensor
and/or
the dew point of the process gas is determined,
3. The value of the oxygen content and/or the dew point determined in step 2 is corrected by means of the value of the hydrogen content determined in step 1.

2. Method according to claim 1, **characterized in that** the oxygen content is determined by means of a lambda probe.

3. Method according to any of the preceding claims, **characterized in that** the hydrogen content is measured by means of gas chromatography or thermal conductivity detector.

4. Method according to any of the preceding claims, **characterized in that** a portion of the process gas is withdrawn from the process chamber, circulated and returned into the process chamber, and that the oxygen content and/or the hydrogen content of the portion of the process gas withdrawn from the process chamber is determined.

5. Method according to any of the preceding claims, **characterized in that,** prior to steps 1 to 3, the hydrogen content of a gas and the oxygen content of the gas are measured both by means of the oxygen sensor and by means of an oxygen analyzer, and the difference between the value measured with the oxygen sensor and the value measured with the oxygen analyzer is correlated with the measured hydrogen content and this correlation is used in step 3 to correct the value of the oxygen content.

6. Method according to any of the preceding claims, **characterized in that** an oxygen-free gas is supplied to the process gas if the corrected value of the oxygen content is larger than a specified comparison value.

7. Method according to any of the preceding claims, **characterized in that** the energy for melting the starting material is supplied by a laser.

8. Method according to any of the preceding claims, **characterized in that** an inert gas, in particular argon, is provided as the process gas.

9. Device for carrying out a method according to any of claims 1 to 8, comprising
- A process chamber having a building platform and an application device for applying the starting material to the building platform,
- A laser for melting the starting material,
- A process gas supply device for supplying process gas into the process chamber,
**characterized in that**
a hydrogen sensor for determining the hydrogen content of the process gas is provided,
an oxygen sensor for determining the oxygen content of the process gas or a sensor for determining the dew point of the process gas is provided,
the hydrogen sensor is connected to a control device and that the oxygen sensor or the sensor is connected to the control device,
and the control device is in operative connection with the process gas supply device,
wherein the device is configured to correct the determined value of the oxygen content and/or the dew point by means of the determined value of the hydrogen content.

## Revendications

1. Procédé de fabrication additive d'un composant tridimensionnel dans une chambre de traitement, dans lequel les étapes de
- fourniture d'un matériau de base métallique dans la chambre de traitement
- fusion du matériau de base par apport d'énergie,
sont répétées plusieurs fois,
dans lequel un gaz de traitement est fourni dans la chambre de traitement et dans lequel la teneur en oxygène du gaz de traitement est déterminée,
**caractérisé en ce**
**que** les étapes suivantes sont exécutées :
1. la teneur en hydrogène du gaz de traitement est déterminée,
2. la teneur en oxygène du gaz de traitement est déterminée au moyen d'un capteur d'oxygène
et/ou
le point de rosée du gaz de traitement est déterminé,
3. les valeurs pour la teneur en oxygène et/ou le point de rosée déterminées dans l'étape 2 sont corrigées au moyen de la valeur pour la teneur en hydrogène déterminée dans l'étape 1.

2. Procédé selon la revendication 1, **caractérisé en ce que** la teneur en oxygène est déterminée au moyen d'une sonde lambda.

3. Procédé selon l'une quelconque des revendications précédentes, **caractérisé en ce que** la teneur en hydrogène est mesurée par chromatographie en phase gazeuse ou au moyen d'un détecteur de conductivité thermique.

4. Procédé selon l'une quelconque des revendications précédentes, **caractérisé en ce qu'**une partie du gaz de traitement est retirée de la chambre de traitement, guidée en circulation et ramenée dans la chambre de traitement et que la teneur en oxygène et/ou la teneur en hydrogène de la partie du gaz de traitement retirée de la chambre de traitement sont déterminées.

5. Procédé selon l'une quelconque des revendications précédentes, **caractérisé en ce que**, avant les étapes 1 à 3, la teneur en hydrogène d'un gaz et la teneur en oxygène du gaz sont mesurées tant au moyen du capteur d'oxygène qu'au moyen d'un analyseur d'oxygène et la différence entre la valeur mesurée par le capteur d'oxygène et la valeur mesurée par l'analyseur d'oxygène est mise en corrélation avec la teneur en hydrogène mesurée et cette corrélation est utilisée dans l'étape 3 pour la correction de la valeur pour la teneur en oxygène.

6. Procédé selon l'une quelconque des revendications précédentes, **caractérisé en ce qu'**un gaz sans oxygène est apporté au gaz de traitement, lorsque la valeur corrigée pour la teneur en oxygène est supérieure à une valeur de comparaison prédéfinie.

7. Procédé selon l'une quelconque des revendications précédentes, **caractérisé en ce que** l'énergie pour la fusion du matériau de base est apportée au moyen d'un laser.

8. Procédé selon l'une quelconque des revendications précédentes, **caractérisé en ce qu'**un gaz inerte, en particulier de l'argon, est prévu comme gaz de traitement.

9. Dispositif pour l'exécution d'un procédé selon l'une quelconque des revendications 1 à 8, comprenant
- une chambre de traitement comprenant une plateforme de construction et un dispositif d'application pour l'application du matériau de base sur la plateforme de construction,
- un laser pour la fusion du matériau de base,
- un dispositif d'apport de gaz de traitement pour l'apport de gaz de traitement dans la chambre de traitement,
**caractérisé en ce**
**qu'**un capteur d'hydrogène pour la détermination de la teneur en hydrogène du gaz de traitement est prévu,
**qu'**un capteur d'oxygène pour la détermination de la teneur en oxygène du gaz de traitement ou un capteur pour la détermination du point de rosée du gaz de traitement sont prévus,
**que** le capteur d'hydrogène est connecté à un dispositif de commande et que le capteur d'oxygène ou le capteur sont connectés au dispositif de commande,
et **que** le dispositif de commande est en liaison d'actionnement avec le dispositif d'apport de gaz de traitement
le dispositif étant configuré pour corriger la valeur déterminée pour la teneur en oxygène et/ou le point de rosée au moyen de la valeur déterminée pour la teneur en hydrogène.
